# EUROPEAN PATENT APPLICATION

(11) **EP 4 819 095 A1**
(43) Date of publication of application: **07.10.2026**
(21) Application number: 25462004.0
(22) Date of filing: 02.04.2025
(51) Int. Cl.: G08G 1/01, G01S 5/00, G01S 17/931, G06V 20/54, G08G 1/0967, G08G 1/16, H04W 4/40, H04W 4/44

(54) **VEHICLE-SPECIFIC DRIVER ASSISTANCE MESSAGES VIA DIGITAL TWIN TO MOBILE DEVICES**

(71) Applicant: Budapesti Müszaki és Gazdaságtudományi Egyetem, 1111 Budapest (HU)
(72) Inventor: Rövid, András, 2310 Szigetszentmiklós (HU); Nagy, Szabolcs, 1211 Budapest (HU); Vincze, Zsolt, 2094 Nagykovácsi (HU); Szalay, Zsolt, 1111 Budapest (HU); Cserni, Márton, 1107 Budapest (HU); Szalai, Mátyás, 1172 Budapest (HU); Csonthó, Mihály, 1053 Budapest (HU); Boronyák, Ádám, 8981 Gellénháza (HU)

(57) **Abstract**

Expanding the capabilities of navigation systems by enabling the transmission of driver-specific driving assistance information. With this technology, real-time digital twin models representing the current state of traffic allow the sending of driving assistance messages to vehicles (and thus to drivers), containing information specific to the given vehicle. In other words, the message is not intended for all participants but is relevant only to a particular vehicle. These messages, taking into account the current traffic conditions, assist drivers in avoiding potentially dangerous situations and contribute to a safer and more comfortable journey.

## Description

The invention CN114155719A entitled "Digital twin car parking device based on machine vision and use method" provides a digital twin car-machine parking device by combining machine vision and digital twin technology. It provides a framework to create a digital twin of the parking lot and provides parking related information to the vehicles/drivers in the parking lot. The license plate and face of driver is used for identification.

In contrast the proposed invention does not uses license plate nor facial data for identification and is not aimed to provide parking information to vehicles/drivers. The association of the vehicle and the mobile phone is based on mobile phone GPS location time series and the digital twin model states. The proposed invention can deliver Advanced Driver Assistance information personalized for individual drivers in high-speed environments (highways), where managing latencies efficiently and accurately associating vehicles with mobile devices of drivers stands for an additional problem.

The invention CN116959242A entitled "Highway digital twin management and control optimization system, method, medium and equipment" provides a highway digital twin management and control optimization system, method, medium and equipment, and creates a highway data visualization engine platform by integrating with digital twins and perception to assist highways. The traffic control department senses real-time traffic information.

In contrast our invention provides advanced driver assistance personalized for individual drivers in high-speed environments. The driver assistance information is sent to the mobile phone of the driver based on the predicted digital twin model of the traffic environment covered by infrastructure sensors. In this case managing latencies efficiently and accurately associating vehicles with mobile devices is crucial.

### Content of the invention

sending vehicle-specific driver assistance messages to the mobile device in the vehicle, which is primarily intended to provide vehicles without sensors and higher levels of driver assistance functions with their environmental model and derived data. Through navigation software installed on mobile devices, we can get a lot of information that helps us to travel more efficiently. It is important to point out that this information does not refer to a specific vehicle, but to all participants (large or small) in a given region. The set of services provided by navigation systems can be significantly expanded/extended if information could also be obtained through the navigation software about the location of moving objects (vehicles/pedestrians) and static elements (e.g. lanes) in the vicinity of the vehicle relative to the vehicle. With this information, the driver can be assisted by various tailored driver assistance messages.

The aim of this invention is to expand the capabilities of navigation systems with the ability to send driver-specific assistance information. With this technology, it becomes possible to send driver assistance messages to vehicles (and thus to drivers) based on the current traffic conditions, with the messages containing vehicle-specific information.

That is, it is not intended for all participants, but applies only to a specific vehicle. The messages help the driver avoid dangerous situations and facilitate a more comfortable journey, taking into account the current traffic situation. The message can be, for example, a message to avoid an accident, e.g. what the driver should do to avoid a likely accident (e.g. change lanes, increase the distance to follow, decrease or increase speed; warning of a pedestrian/vehicle obscured from the driver's point of view).

In other cases, the message may be a recommendation for the optimal driving speed, helping to prevent rear-end collisions when approaching a traffic jam. The message may also warn of an approaching vehicle using emergency lights, aiding its progress and preparing the driver in advance for the special situation.

This technology is based on a real-time digital twin model of the environment (through the processing of data from sensors placed in the infrastructure), which contains the UHD map of the road section covered by the sensors and the position and orientation of dynamic objects (vehicles, pedestrians, etc.). The road section covered by the sensors can also be larger (depending on the number of sensors), allowing for a more accurate estimation of potential traffic hazards. Additionally, traffic control can be made more efficient by sending specific recommendations to drivers within the covered section, such as lane changes, optimal speed, and appropriate following distance.

In vehicles equipped with driving support systems, many such messages can be derived locally based on the traffic situation assessed using the vehicle's own sensors. However, these sensors can only detect and interpret a limited area around the vehicle and do not have information about objects outside their coverage. Based on the above, it can be said that the range of safety functions available in the most modem vehicles can further be expanded with this technology.

In close connection with this, data exchange between vehicle-vehicle and vehicle-infrastructure is currently only a function supported in a few types of vehicles. The majority of vehicles on the roads do not yet have this capability or more advanced driving support systems. For vehicles that do not support communication with other vehicles or infrastructure, the invented system can still identify the vehicle and provide tailored data specific for that vehicle (by communicating with the mobile device in the vehicle). In the case of solutions used by a navigation software, driver-specific messages cannot be provided, furthermore it is not guaranteed that the respective app is being used in vehicles traveling on the affected road section.

The purpose of the present invention is to enable the provision of driver assistance tailored to the given driver trough a mobile device by linking the mobile-device/mobile-devices located in the vehicle (6) with the digital equivalent (4) of that vehicle in the digital twin model of the environment (1) generated by the central computer. The digital twin model includes the static elements of the environment (in form of UHD map) and the dynamic elements (vehicles, pedestrians and other dynamic objects), which are updated at a 20Hz refresh rate. Mobile devices in vehicles connect to the central server (11) via a 4G/5G connection (10). The established connections are registered in the mobile2vehicle module (5) in the central server. The central server is running on the central computer. Through these connections (11), mobile devices transmit their GNSS (Global Navigation Satellite System) position to the central server (11) in the form of time series with associated timestamps. Based on these timestamps (13), the GNSS positions incoming to the mobile2vehicle module (5) get associated with the positions of vehicles (tracks) in the digital twin model at the corresponding time (14), i.e. pairs of the form (mobile-device-trajectory) ↔ (vehicle-trajectory) are obtained. Here the track refers to the recorded path of a vehicle over time. Here, trajectory refers to the time series resulting from position data received at a given frequency (14). Among all (mobile-device-trajectory) ↔ (vehicle trajectory) pairings, each mobile device gets associated with the vehicle that yields the highest similarity metric when comparing the two trajectories. Here the metric describes the degree of similarity between two trajectories. Once the <mobile-device, track> association is performed, it is maintained until the track exists.

Since each mobile device communicating with the central server has an associated communication link (10) which is registered in the mobile2vehicle module (5) of the central server, it is known through which communication link the driver-assistance message tailored to a given vehicle (4) in the digital twin model can be transmitted to the mobile-device contained in the real-vehicle (6). The driver-assistance message is derived from the digital twin.

The digital twin model (20) together with the identified <mobile-device, track> mappings (provided by the mobile2vehicle mapping component (5)) is used by the prediction component (19), which predicts the future state of the digital twin model (21) based on the network delay and delays resulting from data processing. These delays are determined from the timestamps available in the processed data at each processing stage.

The predicted twin model (21) serves as input to the driver assistance message generation component (2), which generates the driver-assistance message derived from the predicted digital twin model (21). Driver assistance messages derived from the predicted digital twin become up-to-date (reflecting the current state of traffic) when they arrive in the designated mobile device (6),(22) located in the vehicle.

If there are more than one mobile device in the vehicle, the GNSS position uncertainty is reduced by aggregating the position data of the mobile devices, i.e. the uncertainty -weighted average of the positions of each mobile device is used. In this case, a master mobile device (16) is selected, which communicates directly with the mobile2vehicle association component (19) of the central server. Slave mobile devices (17, 18) transmit their GNSS position to the master mobile device. Aggregation is performed by weighted averaging based on timestamps and measurement uncertainties on the master's mobile device. The master mobile device transmits the aggregated position time series data together with the corresponding timestamps to the mobile2vehicle association component of the central server.

**The following are descriptions of the figures:**

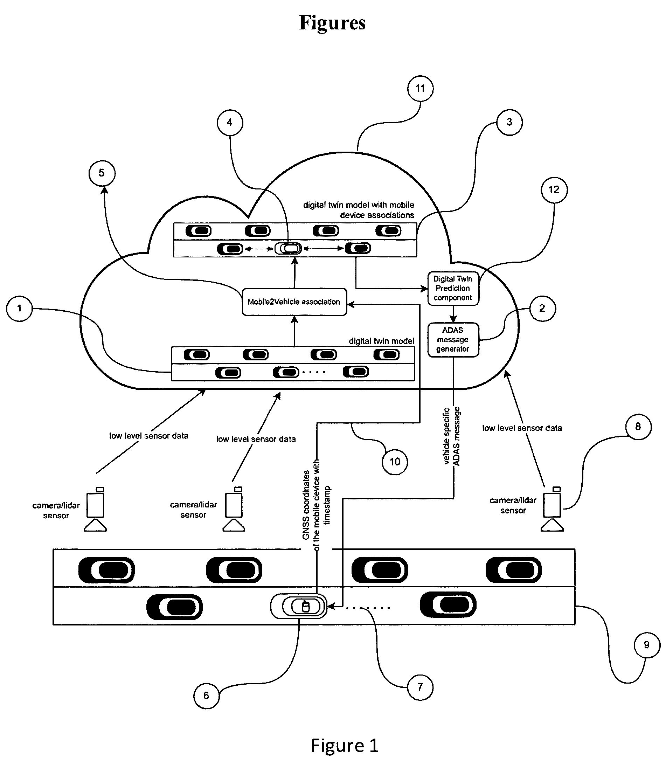

Figure 1: A system outline for generating driver-specific assistance messages based on the digital twin model and sending them to the corresponding mobile device, along with its components and the relationships between these components. Based on the raw data from the sensors (8) installed in the infrastructure, a digital twin model (1) of the traffic and its environment (9) is generated on the central server with a refresh rate of 20Hz. The digital twin model serves as input for the mobile2vehicle mapping component (5). The mapping component augments the digital twin model with information that specifies which mobile device the existing vehicles in each digital twin model are associated with.

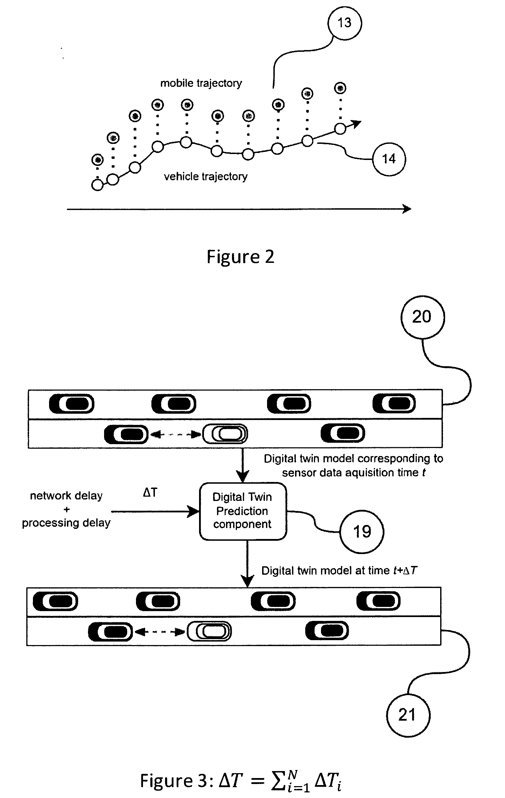

Figure 2: Illustration of the comparison between the time series of GNSS positions generated by the mobile device and the pattern resulting from the positions measured at the same time points on the trajectory traveled by the vehicle represented in the digital twin model.
Figure 3: The state of the digital twin model at the time of raw sensor data creation t (20) and its future state at time t+ΔT (21) generated by the component performing the prediction (19). Here, ΔT represents the sum of delays from the network and various processing phases, i.e., $Δ T = {\sum }_{i = 1}^{N} Δ {T}_{i}$.

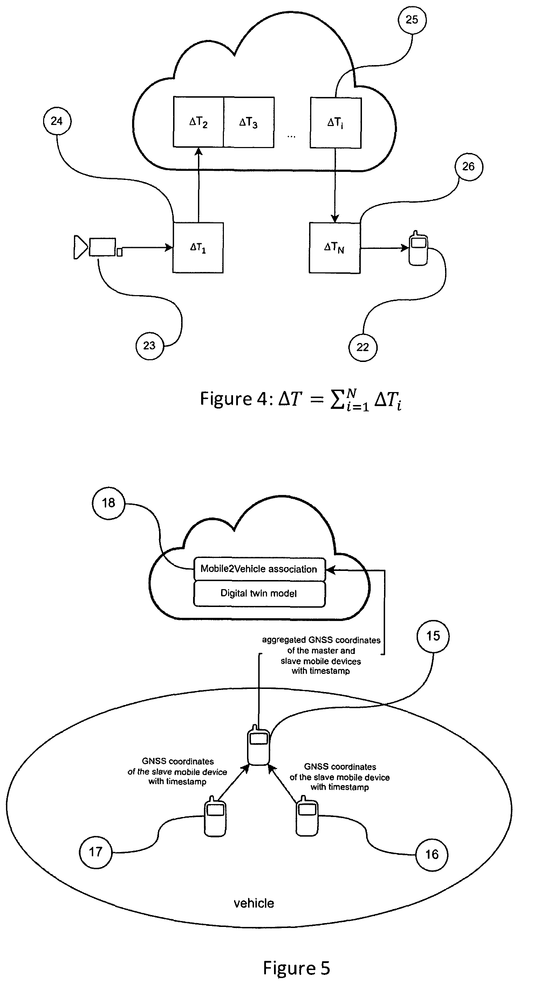

Figure 4: The network delay (24) of communication between the sensor (23) and the central server, the delay associated with each phase of processing the data received by the central server (25), and the communication delay (26) between the central server and the mobile device (22).
Figure 5: If there is more than one mobile device in the vehicle, a master-slave relationship is established between them. Slave devices (16)(17) transmit their GNSS position to the master device (15), where position aggregation takes place. The master device transmits the aggregate position to the mobile2vehicle association component (18) of the central server, located above the layer providing the digital twin model.

## Claims

1. A personalized driver assistance information system consisting of a mobile device arbitrarily positioned in the vehicle (6) and communicating with the central server (11). The central server consisting a component to provide the digital twin model of the environment (1), a mobile-device-to-vehicle mapping component (5) to associate mobile-devices with tracks in the digital twin model, a digital twin prediction component (12) and a component generating a driver assistance message for the vehicle. The digital twin prediction component utilizes the digital twin model, the output provided by the mobile-device-to-vehicle mapping component, and the latencies measured based on the timestamps available in the data at each phase of processing. The data contained in driver assistance messages are derived from the predicted digital twin model (21).

2. The digital twin model with mobile device associations (3) is the digital representation of the environment, **characterized by** a UHD map (describing static elements of the environment) and the spatial position, orientation and dimensions of the dynamic elements updated in real time (1), as well as by a mobile-device-to-track association used to determine which communication channel (10) can be used to communicate (send driver assistance messages tailored to the specific vehicle) with the mobile-device located in the real-vehicle (6) represented by the given track (4) in the digital twin model.

3. The mobile-device-to-vehicle mapping component (5), **characterized by** the fact that it uses patterns of GNSS position time series from mobile devices (7, 14) and position time series of vehicles (14) present in the digital twin model to associate the vehicle in the digital twin with an active mobile connection (communication channel). If more than one mobile device is available in the vehicle, the aggregate position of each mobile device is used (Figure 5).

4. The prediction component (12) predicts the state of the digital twin model (the state of dynamic objects representing pedestrians and vehicles in traffic) with a time corresponding to the sum of the delays caused by the network (24, 26) and data processing (25), relative to the creation of the sensor data (23).

5. The driver assistance message generating component (2) is **characterized by** deriving driver assistance data based on the predicted state (21) of the digital twin model according to Claim 4. Thus, the driver assistance data becomes current when it is received on the mobile device (22) received on the mobile-device located in the vehicle (6) to which the message relates.
